# EUROPEAN PATENT APPLICATION

(11) **EP 0 697 449 A2**
(43) Date of publication of application: **21.02.1996**
(21) Application number: 95305640.5
(22) Date of filing: 11.08.1995
(51) Int. Cl.: C09D 183/06

(54) **Radiation curable compositions containing vinyl ether functional polyorganosiloxanes**

(30) Priority: 17.08.1994 US 291660
(71) Applicant: DOW CORNING CORPORATION, Midland, Michigan 48686-0994 (US)
(72) Inventor: Bujanowski, Valerie Joy, Midland, Michigan (US); Cannady, John Patrick, Midland, Michigan (US); Glover, Shedric Oneal, Midland, Michigan (US); Homan, Gary Rex, Midland, Michigan (US); Perz, Susan Victoria, Essexville, Michigan (US); Skinner, Michael Ward, Midland, Michigan (US); Ziemelis, Maris Jazeps, Midland, Michigan (US)
(74) Representative: Vandamme, Luc Johan Roger

(57) **Abstract**

The present invention relates to compositions comprising vinyl ether functional siloxanes and aromatic iodonium salt or aromatic sulfonium salt photoinitiators which cure upon exposure to ultraviolet or electron beam radiation. The present invention further relates to use of these compositions in pressure sensitive release applications.

## Description

The present invention relates to compositions containing vinyl ether functional siloxanes and a photoinitiator of aromatic iodonium salt or aromatic sulfonium salt. These compositions are radiation curable upon exposure to actinic radiation.

Radiation curable compositions which contain alkenyl ether functional organosilicon compounds have been described in the art and are represented by: U.S. Patents 4,617,238 or 5,270,423; EP-A 0462389 and DE-A 4,142,327.

However, none of these references disclose the particular diaryliodonium salt catalysts in combination with the vinyl ether functional polysiloxanes of the instant invention.

The present invention provides a radiation curable composition comprising vinylether functional polysiloxane compounds in combination with a photoinitiator selected from diaryliodonium salts of sulfonic acids, triarylsulfonium salts of sulfonic acids, diaryliodonium salts of boronic acids and triarylsulfonium salts of boronic acids.

Our invention further relates to a method of making a cured coating, comprising the steps of (I) applying a composition comprising (A) a vinylether functional polysiloxane compound and (B) a photoinitiator selected from diaryliodonium salts of sulfonic acids, triarylsulfonium salts of sulfonic acids, diaryliodonium salts of boronic acids and triarylsulfonium salts of boronic acids to a solid substrate to form a coating, and (II) exposing the coating to an energy source selected from actinic radiation or actinic radiation in combination with heat in an amount sufficient to cure the coating.

The object of this invention is to provide UV or EB curable coating compositions suitable for pressure sensitive adhesive release applications.

It is also an object of our invention to produce silicone vinyl ether copolymers or oligomers which are curable by addition of a photoinitiator of an aromatic iodonium salt or aromatic sulfonium salt and by subsequent exposure to UV (ultraviolet) or EB (electron beam) radiation.

It is a further object of this invention to provide UV curable release coating compositions having especially rapid cure rates.

The present invention introduces a curable coating composition comprising
(A) a siloxane compound having the general formula: 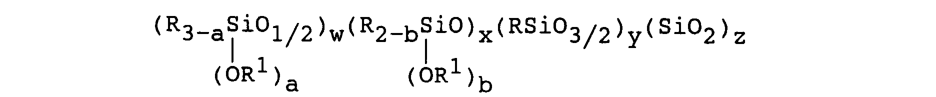
wherein R is a monovalent hydrocarbon radical or halohydrocarbon radical having from 1 to 20 carbon atoms, R¹ is selected from monovalent hydrocarbon or halohydrocarbon radicals having from 1 to 8 carbon atoms and a group having a formula selected from (i) -ROCH=CH₂ or (ii) -RSi[OROCH=CH₂]_{3-c}R_{c} wherein R is a divalent hydrocarbon or halohydrocarbon radical having from 1 to 20 carbon atoms, c has a value of 0 to 2, R is as defined above, w has a mole percent of from greater than 0 to 100, x has a mole percent of from 0 to less than 100, y has a mole percent of from 0 to less than 100, z has a mole percent of from 0 to less than 100, a is an integer of from 0 to 3, b is an integer of from 0 to 2, the sum of w+x+y+z is equal to 100 mole percent, with the proviso that at least one ≡SiOROCH=CH₂ group or ≡SiORSi[OROCH=CH₂]_{3-c}R_{c} group exists in each compound; and (B) a photoinitiator selected from diaryliodonium salts of sulfonic acids, triarylsulfonium salts of sulfonic acids, diaryliodonium salts of boronic acids and triarylsulfonium salts of boronic acids.

R denotes a monovalent hydrocarbon radical having from 1 to 20 carbon atoms. Monovalent hydrocarbon radicals include alkyl radicals, such as methyl, ethyl, propyl, butyl, hexyl, octyl and decyl; cycloaliphatic radicals, such as cyclohexyl; aryl radicals, such as phenyl, tolyl and xylyl; aralkyl radicals, such as benzyl or phenylethyl and olefinic hydrocarbon radicals, such as vinyl, allyl, methallyl, butenyl, hexenyl, octenyl, cyclohexenyl and styryl. Alkenyl radicals are preferably terminally unsaturated. Highly preferred monovalent hydrocarbon radicals for our invention are methyl and phenyl. Monovalent halohydrocarbon radicals include any hydrocarbon radical noted above which has at least one of its hydrogen atoms replaced with a halogen, such as fluorine, chlorine or bromine. Preferred monovalent halohydrocarbon radicals have the formula CₙF₂ₙ₊₁CH₂CH₂- wherein the subscript n has a value of from 1 to 8, such as CF₃CH₂CH₂- and C₄F₉CH₂CH₂-. The several R radicals can be identical or different, as desired.

R¹ in our compositions is a monovalent hydrocarbon or halohydrocarbon radical having from 1 to 8 carbon atoms which include alkyl radicals such as methyl, ethyl, propyl, butyl, hexyl or octyl; or a monovalent halohydrocarbon radical as described above for R. R¹ is also a group having its formula selected from the group consisting of (i) -ROCH=CH₂ and (ii) -RSi[OROCH=CH₂]_{3-c}R_{c} wherein R is a divalent hydrocarbon or halohydrocarbon radical having from 1 to 20 carbon atoms, c has a value of 0 to 2 and R is as defined above. Suitable R radicals are exemplified by alkylene radicals, such as methylene, ethylene, hexylene, trimethylene, 2-methyltrimethylene, pentamethylene, hexamethylene, 3-ethylhexamethylene, octamethylene, -CH₂(CH₃)CH-, -(CH₂)₄-, -CH₂CH(CH₃)CH₂- and -(CH₂)₁₈-; cycloalkylene radicals such as cyclohexylene or cyclohexyl-dimethylene; arylene radicals such as phenylene; and combinations of divalent hydrocarbon radicals such as benzylene, i.e. -C₆H₄CH₂-. Examples of suitable divalent halohydrocarbon radicals include any divalent hydrocarbon radical wherein one or more hydrogen atoms have been replaced by halogen, such as fluorine, chlorine or bromine. Preferably, the divalent halohydrocarbon radicals have the formula -CH₂CH₂CₙF₂ₙCH₂CH₂- wherein n has a value of from 1 to 10, such as -CH₂CH₂CF₂CF₂CH₂CH₂-. The divalent hydrocarbon radicals of R can be the same or different as desired. Preferably, R is an alkylene radical having from 1 to 8 carbon atoms such as methylene, ethylene, propylene, butylene, hexylene or cyclohexyldimethylene.

The siloxane copolymer (A) of the present invention is thus comprised of siloxane units of the formula 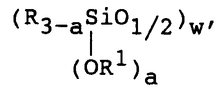
siloxane units of the formula 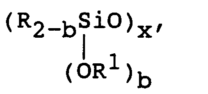
siloxane units of the formula (RSiO_{3/2})_{y} and siloxane units of the formula (SiO₂)_{z} with the molar ratios defined above.

It is preferred in this invention that w has a mole percent of from 5 to 90, x has a mole percent of from 0 to 75, y has a mole percent of from 0 to 40 and z has a mole percent of from 0 to 10. It is further preferred that the molecular weight of said composition be controlled to deliver a solvent-free viscosity of from 20 to 5000 cps (mPa·s) at 22°C.

The vinylether functional polysiloxanes of this invention are prepared by the method described in our commonly assigned patent application EP-A 0625535 or by the method described in U.S. Patent 5,270,423 which both teach how to make suitable vinylether polysiloxanes.

It is preferred for purposes of this invention that from 90 to 99.9 weight percent of the siloxane compound (A) be used in these compositions and it is highly preferred that from 97 to 99 weight percent be employed, said weight percent being based on the total weight of the composition.

Component (B) in these compositions is a photoinitiator selected from the group consisting of diaryliodonium salts of sulfonic acids, triarylsulfonium salts of sulfonic acids, diaryliodonium salts of boronic acids and triarylsulfonium salts of boronic acids. Preferred diaryliodonium salts of sulfonic acid are selected from diaryliodonium salts of perfluoroalkylsulfonic acids and diaryliodonium salts of aryl sulfonic acids. Preferred diaryliodonium salts of perfluoroalkylsulfonic acids include diaryliodonium salts of perfluorobutanesulfonic acid, diaryliodonium salts of perfluoroethanesulfonic acid, diaryliodonium salts of perfluoro-octanesulfonic acid and diaryliodonium salts of trifluoromethane sulfonic acid. Preferred diaryliodonium salts of aryl sulfonic acids include diaryliodonium salts of para-toluene sulfonic acid, diaryliodonium salts of dodecylbenzene sulfonic acid, diaryliodonium salts of benzene sulfonic acid and diaryliodonium salts of 3-nitrobenzene sulfonic acid.

Preferred triarylsulfonium salts of sulfonic acid are selected from triarylsulfonium salts of perfluoroalkylsulfonic acids and triarylsulfonium salts of aryl sulfonic acids. Preferred triarylsulfonium salts of perfluoroalkylsulfonic acids include triarylsulfonium salts of perfluorobutanesulfonic acid, triarylsulfonium salts of perfluoroethanesulfonic acid, triarylsulfonium salts of perfluorooctanesulfonic acid and triarylsulfonium salts of trifluoromethane sulfonic acid. Preferred triarylsulfonium salts of aryl sulfonic acids include triarylsulfonium salts of paratoluene sulfonic acid, triarylsulfonium salts of dodecylbenzene sulfonic acid, triarylsulfonium salts of benzene sulfonic acid and triarylsulfonium salts of 3-nitrobenzene sulfonic acid.

Preferred diaryliodonium salts of boronic acids and triarylsulfonium salts of boronic acids are those disclosed in EP-A 0562922. Preferred diaryliodonium salts of boronic acids include diaryliodonium salts of perhaloarylboronic acids and the preferred triarylsulfonium salts of boronic acids are the triarylsulfonium salts of perhaloarylboronic acid.

Preferred diaryliodonium salts for use as Component (B) in our compositions are a diaryliodonium salt having the general formula RⁱₐArI⁺ArRⁱⁱ_{b}X⁻ wherein Rⁱ is selected from monovalent hydrocarbon or halohydrocarbon radicals free of aliphatic unsaturation having from 1 to 40 carbon atoms, halogen atoms, NO₂, CN, COOH, SO₃H, alkoxy radicals, nitro substituted groups, nitrile substituted groups, carboxylic acid substituted groups, sulfonic acid substituted groups and alkoxy substituted groups. Rⁱⁱ is selected from monovalent hydrocarbon radicals free of aliphatic unsaturation and having from 1 to 40 carbon atoms, alkoxy substituted groups, arylalkoxy radicals, aryloxy radicals and halogen atoms. Ar denotes arene radicals having from 6 to 40 carbon atoms, a has a value of from 0 to 10, b has value of from 0 to 10 and X⁻ is an anion selected from the group consisting of perfluoroalkylsulfonic acid anions, hexahalometallic acid anions, hexahalometalloidic acid anions, tetrahaloboronic acid anions, tetrakis(perfluoroaryl)boronic acid anions and tetrakisperfluoroalkyl-sulfonatoboronic acid anions.

Ar in the formula hereinabove also denotes an aromatic (arene) radical having the formula CₙH_{n/(2+2)} or of formula CₘH_{m/(2+1)}, wherein n has a value of 6, 10, 14, 18, 22, 26, 30, 34 or 38 and m has a value of 16, 20, 24, 28, 32, 36 or 40.

Rⁱ is a monovalent hydrocarbon or halohydrocarbon radical free of aliphatic unsaturation having from 1 to 40 carbon atoms. Suitable monovalent hydrocarbon radicals are alkyl radicals such as methyl, ethyl, propyl, butyl, hexyl, octyl and decyl; cycloaliphatic radicals such as cyclohexyl; aryl radicals such as phenyl, tolyl and xylyl; and arylalkyl radicals such as benzyl or phenylethyl. Rⁱ further includes arene radicals having from 6 to 40 carbon atoms such as naphthyl (C₁₀H₇), anthracenyl or phenanthracenyl (C₁₄H₉), pyrenyl (C₁₆H₉), napthacenyl, 9,10-benzophenanthrenyl, chrysenyl, 1,2-benzanthracenyl or 3,4-benzophenanthrenyl (C₁₈H₁₁), 3,4-benzopyrene or perylenyl (C₂₀H₁₁), 1,2,3,4-dibenzanthracenyl, 1,2,5,6-dibenzanthracenyl, 1,2,6,7-dibenzoanthracenyl, 1,2,7,8-dibenzanthracenyl, 1,2,6,7-dibenzophenanthracenyl, 1,2,7,8-dibenzophenanthracenyl, pentacenyl or picenyl (C₂₂H₁₃), coronenyl (C₂₄H₁₁), 1,2,4,5-dibenzopyrene (C₂₄H₁₃) and hexacenyl (C₂₆H₁₅). Rⁱ may also include combinations of the above radicals attached to one another such as phenylhexadecenyl (C₃₂H₁₉) or anthracenyl-hexacenyl (C₄₀H₂₃).

Rⁱ can also be a halogen atom or a radical selected from NO₂, CN, COOH and SO₃H. Halogen atoms suitable as Rⁱ include fluorine, chlorine and bromine. Alkoxy radicals suitable as Rⁱ include methoxy, ethoxy, propoxy and butoxy radicals. Nitro substituted groups suitable as Rⁱ include 3-O₂N-C₆H₄ or 4-Cl-3-O₂N-C₆H₃. Suitable nitrile substituted groups are 4-NC-C₆H₄, 1-NC-C₁₀H₇ or 2-NC-C₁₀H₇. Carboxylic acid substituted groups suitable as Rⁱ are groups such as 4-HOOC-C₆H₄ or 3-HOOC-C₆H₄. Suitable sulfonic acid substituted groups as Rⁱ are 4-HO₃S-C₆H₄ or 3-HO₃S-C₆H₄. The alkoxy substituted groups suitable as Rⁱ include groups such as 4-CH₃O-C₆H₄, 4-C₂H₅O-C₆H₄, 2-CH₃O-C₆H₄ and 2-C₂H₅O-C₆H₄.

The monovalent hydrocarbon radicals free of aliphatic unsaturation having from 1 to 40 carbon atoms (including arene radicals having from 6 to 40 carbon atoms), alkoxy substituted groups and halogen atoms suitable as Rⁱⁱ are as delineated above for Rⁱ including preferred embodiments thereof. Arylalkoxy radicals suitable as Rⁱⁱ include radicals such as benzyloxy or phenylethyloxy. Aryloxy radicals suitable as Rⁱⁱ are phenoxy or napthoxy.

Ar denotes arene radicals having from 6 to 40 carbon atoms. Suitable arene radicals are phenyl (C₆H₅), naphthyl (C₁₀H₇), anthracenyl or phenanthracenyl (C₁₄H₉), pyrenyl (C₁₆H₉), napthacenyl, 9,10-benzophenanthrenyl, chrysenyl, 1,2-benzanthracenyl or 3,4-benzophenanthrenyl (C₁₈H₁₁), 3,4-benzopyrene or perylenyl (C₂₀H₁₁), 1,2,3,4-dibenzanthracenyl, 1,2,5,6-dibenzanthracenyl, 1,2,6,7-dibenzoanthracenyl, 1,2,7,8-dibenzanthracenyl, 1,2,6,7-dibenzophenanthracenyl, 1,2,7,8-dibenzophenanthracenyl, pentacenyl or picenyl (C₂₂H₁₃), coronenyl (C₂₄H₁₁), 1,2,4,5-dibenzopyrene (C₂₄H₁₃), hexacenyl (C₂₆H₁₅), and combinations of these radicals attached to one another such as phenylhexadecenyl (C₃₂H₁₉) or anthracenylhexacenyl (C₄₀H₂₃).

The anion X⁻ is an anion selected from the group consisting of perfluoroalkylsulfonic acid anions, hexahalometallic acid anions, hexahalometalloidic acid anions, tetrahaloboronic acid anions, tetrakis(perfluoroaryl)boronic acid anions and tetrakisperfluoroalkylsulfonatoboronic acid anions. Perfluoroalkylsulfonic acid anions are exemplified by perfluorobutanesulfonic acid anions, perfluoroethanesulfonic acid anions, perfluorooctanesulfonic acid anions or trifluoromethanesulfonic acid anions. Hexahalometallic acid anions include anions such as SbF₆⁻, AsF₆⁻, SbCl₆⁻ and AsCl₆⁻; hexahalometalloidic acid anions include anions such as PF₆⁻ and PCl₆⁻; tetrahaloboronic acid anions include anions such as BF₄⁻, BCl₄⁻ and BBr₄⁻; tetrakis perfluoroaryl boronic acid anions are exemplified by B(C₆H₅)₄⁻ or B(C₁₀F₇)₄⁻ and tetrakisperfluoroalkylsulfonatoboronic acid anions include anions such as B(O₃SCF₃)₄⁻, B(O₃SC₂F₅)₄⁻ and B(O₃SC₄F₉)₄⁻. It is preferred that X⁻ is trifluoromethanesulfonate.

Also preferred as diaryliodonium salts for use as Component (B) in our compositions is a diaryliodonium salt having the general formula:

RⁱⁱⁱₐAr-I⁺-Ar-R^{iv}_{b}-O₃S-Ar-RⁱⁱⁱₐX⁻,

wherein Rⁱⁱⁱ is selected from monovalent hydrocarbon or halohydrocarbon radicals free of aliphatic unsaturation and having from 1 to 20 carbon atoms, halogen atoms, NO₂, CN, COOH, SO₃H, alkoxy or alkoxy substituted groups, nitro substituted groups, nitrile substituted groups, carboxylic acid substituted groups, sulfonic acid substituted groups and Ar denotes arene radicals having from 6 to 40 carbon atoms. R^{iv} is selected from alkoxy radicals or aryloxy radicals, a has a value of from 0 to 5, b has a value of from 0 to 5 and X⁻ is an aryl sulfonate anion. The diaryliodonium tosylates of the invention may be prepared, for example, by the method of Neilands and Karele, Journal of Organic Chemistry, U.S.S.R., (1970), v. 6, p. 889.

The monovalent hydrocarbon or halohydrocarbon radicals free of aliphatic unsaturation and having from 1 to 20 carbon atoms, halogen atoms, alkoxy or alkoxy substituted groups, nitro substituted groups, nitrile substituted groups, carboxylic acid substituted groups, sulfonic acid substituted groups and arene radicals having from 6 to 40 carbon atoms. Alkoxy radicals and aryloxy radicals of Riii and R^{iv} are as described above including preferred embodiments thereof. The group Rⁱⁱⁱ is the same or different as desired.

Preferred aryl sulfonate anions include aryl sulfonates (tosylates) such as p-toluenesulfonate, 4-methylphenylsulfonate (4-(CH₃)C₆H₄SO₃⁻), benzenesulfonate (C₆H₅SO₃⁻), dodecylbenzenesulfonate (4-(C₁₂H₂₅)-C₆H₄SO₃⁻) and 3-nitrobenzenesulfonate (3-(NO₂)C₆H₄SO₃).

Our photoinitiator compounds may be present in any proportion which effects curing in the method of this invention. For this invention, the amount of photoinitiator is preferably from 0.1 to 10 percent by weight based on the total weight of the composition. Moreover, it is highly preferred to use between 1 and 5 percent by weight of the photoinitiator compound based on the total weight of the composition.

Our curable coating composition can alternatively include a reactive diluent such as an organic vinyl ether compound having the formula (CH=CHOR³)_{d}CR⁴_{4-d} wherein R³ is a divalent hydrocarbon or halohydrocarbon radical having from 1 to 20 carbon atoms. R⁴ is a monovalent hydrocarbon or halohydrocarbon radical having from 1 to 20 carbon atoms or hydrogen and d has a value of 1 to 3. The divalent hydrocarbon and halohydrocarbon radicals are as delineated above for R radicals of the vinyl ether functional organopolysiloxane, including preferred embodiments thereof. The monovalent hydrocarbon radicals are as delineated above including preferred embodiments thereof.

For the present invention, the amount of optional reactive diluent is from 0 to 30 percent by weight based on the total weight of the composition. It is preferred to use between 3 and 15 percent by weight of reactive diluent, based on the total composition.

Our curable coating compositions can further comprise an anchorage additive having the formula R⁵₄₋ₑSi(OR⁶)ₑ wherein R⁵ is selected from a monovalent hydrocarbon or halohydrocarbon radical having from 1 to 20 carbon atoms and a group having its formula selected from (a) -OR⁷OCH=CH₂ or (b) -R⁷OR⁷OCH=CH₂. R⁷ is a divalent hydrocarbon or halohydrocarbon radical having from 1 to 20 carbon atoms; R⁶ is a monovalent hydrocarbon radical having from 1 to 8 carbon atoms and e has a value of from 1 to 3, with the proviso that at least one ≡SiOR⁷OCH=CH₂ group or ≡SiR⁷OR⁷OCH=CH₂ group exists in each compound. It is preferable that R⁶ is an alkyl radical having from 1 to 3 carbon atoms.

The amount of anchorage additive is preferably from 0.1 to 10 percent by weight based on the total weight of the composition and it is highly preferred to be between 1 and 5 percent by weight.

When x has a value of 0 in siloxane compound (A), (A) is a resin. When x has a value of 0 in siloxane (A), our compositions can further comprise a linear organopolysiloxane compound having the general formula: 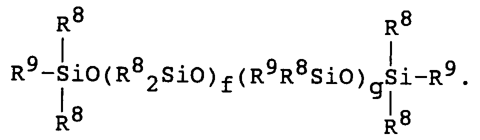
R⁸ is a monovalent hydrocarbon radical having from 1 to 20 carbon atoms; R⁹ is R⁸ or is a group having the formula (i) -OR¹⁰OCH=CH₂ or (ii) -R^{1O}Si[OR¹⁰OCH=CH₂]₃₋ₕR¹¹ₕ. R¹⁰ is a divalent hydrocarbon or halohydrocarbon radical having from 1 to 20 carbon atoms; h has a value of 0 to 2; R¹¹ is a monovalent hydrocarbon radical having from 1 to 20 carbon atoms; f has a value of 0 to 5000 and g has a value of 0 to 800, with the proviso that at least one ≡SiOR^{1O}OCH=CH₂ group or ≡SiR¹⁰Si[OR¹⁰OCH=CH₂]₃₋ₕR¹¹ₕ group exists in each compound. The divalent hydrocarbon radicals of R¹⁰ are as delineated above for R radicals, including preferred embodiments thereof. The group R¹⁰ can be the same or different as desired. It is preferred that R⁸ is methyl and R¹⁰ is selected from methylene, ethylene, propylene, butylene, hexylene and cyclohexyldimethylene. It is highly preferred that R¹⁰ is ethylene or butylene.

It is preferred for this invention that from 95 to 99.5 weight percent of a linear organopolysiloxane compound, described above, be used in our compositions. It is highly preferred that from 97 to 99 weight percent of this compound be employed, said weight percent being based on the total weight of the composition.

The present invention further relates to a method of making a cured coating, comprising the steps of (I) applying a composition comprising (A) a siloxane compound having the general formula: 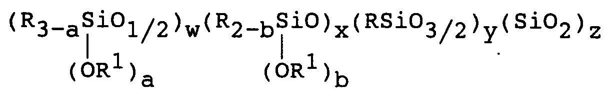
wherein R, R¹, w, x, y, z, a and b are as defined above including preferred embodiments thereof and (B) a photoinitiator selected from the group consisting of diaryliodonium salts of sulfonic acids, triarylsulfonium salts of sulfonic acids, diaryliodonium salts of boronic acids and triarylsulfonium salts of boronic acids to a solid substrate to form a coating, and (II) exposing the coating to an energy source selected from (i) actinic radiation or (ii) actinic radiation in combination with heat in an amount sufficient to cure the coating.

Step (I) in this method comprises applying a composition of (A) a vinylether functional polysiloxane compound and (B) a photoinitiator selected from the group consisting of diaryliodonium salts of sulfonic acids, triarylsulfonium salts of sulfonic acids, diaryliodonium salts of boronic acids and triarylsulfonium salts of boronic acids to a solid substrate to form a coating. The siloxane compound and photoinitiator are as delineated above, including preferred embodiments thereof. The composition employed in step (I) of our method can further comprise a reactive diluent, anchorage additive and linear organopolysiloxane compound as also delineated above, including amounts and preferred embodiments.

The method of this invention is practiced by mixing the above materials and any optional components in any order. Any suitable mixing means may be employed, such as a spatula, a drum roller, a mechanical stirrer, a three-roll mill, a sigma blade mixer, a bread dough mixer and a two-roll mill. In this method, the coating is applied by any suitable manner known in the art, such as by spreading, brushing, extruding, spraying, gravure, kiss-roll and air-knife.

In a preferred embodiment, the solid substrate is a flexible sheet material such as paper, polyolefin film, polyolefin-coated paper or foil. Other suitable solid substrates may be coated by our method and include other cellulosic materials such as wood, cardboard and cotton; metallic materials such as aluminum, copper, steel and silver; siliceous materials such as glass or stone; and synthetic polymer materials such as polyolefins, polyamides, polyesters and polyacrylates. As to form, the solid substrate can be substantially sheet-like, such as a peelable release liner for a pressure sensitive adhesive; a fabric; a foil or even substantially three-dimensional in form.

Step (II) in this method comprises exposing the coating to an energy source selected from (i) actinic radiation or (ii) actinic radiation in combination with heat in an amount sufficient to cure the coating. Actinic radiation means ultraviolet light; electron beam radiation; or alpha-, beta-, gamma- or x-rays. By heat, it is meant infrared radiation, hot-air, microwave radiation and the like. Of course, actinic radiation is frequently accompanied by heat and the use of a combination of the two is appropriate. The term "cure", as applied to the composition and method of this invention, generally denotes a chemical change which leads to a change in the state of the composition from a liquid to a solid. Curing is achieved in any of the known ways, including passing a coated substrate under the desired source of radiation, for example a UV lamp, at a predetermined rate and exposing said substrate to radiation by switching on the required energy source for a predetermined time.

In a preferred embodiment, a flexible sheet material is coated with a thin coating of our liquid curable composition, preferably in a continuous manner. The coating is then heated and/or irradiated to rapidly cure the material and to provide a sheetlike material, bearing on at least one surface thereof an adhesive-releasing coating. The adhesive-releasing coating is subsequently brought into contact with a pressure sensitive adhesive, preferably in an in-line manner, to form an article having a peelable, i.e. releasable, adhesive/coating interface. Examples of such an article include, adhesive labels having a peelable backing, adhesive tape in roll form and adhesive packaged in a strippable container. The pressure sensitive adhesive can be non-silicone-based, such as the well-known acrylic or rubber types or it can be silicone-based, such as the peroxide- or platinum-curable polydiorganosiloxane-based adhesives.

The methods and compositions of this invention are also applicable to adhesive materials other than pressure sensitive adhesives. Examples of said adhesive materials include foods, asphalt and gum polymers. The compositions of this invention are useful as release coatings for pressure sensitive adhesives, protective coatings and decorative coatings.

The compositions prepared by the method of our invention and our curable coating compositions may also contain optional components such as photosensitizers, high release additives, reinforcing and extending fillers, hydrocarbons and halohydrocarbons, colorants, dyes, preservatives, fragrances, stabilizers, adhesion modifiers, adhesive-release modifiers and diluents.

The following examples are disclosed to further teach the invention which is properly delineated by the appended claims. All amounts (parts and percentages) are by weight unless otherwise indicated. The structures presented in the examples are expressed in mole percents unless otherwise indicated.

Cure time for a composition is the time interval required for the composition, when coated onto S2S kraft paper or polypropylene film, at a thickness of 1 pound (454 g) of silicone per ream of paper or film, to attain the no smear, no migration, no rub-off condition.

HDDVE denotes hexanedioldivinyl ether, TMPTVE denotes trimethylolpropane trivinyl ether and HBVE denotes hydroxybutylvinylether.

### Example 1

To a suitable container, 0.20 gram of tolyl (didodecylphenyl) iodonium triflate (trifluoromethanesulfonate), referred to as "triflate" catalyst hereinafter and 10 grams of a silicone vinyl ether copolymer containing approximately 17% by weight of vinyl ether and having the general formula 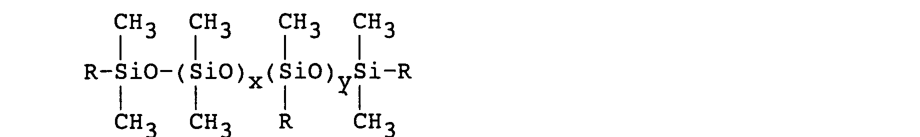
wherein R denotes the group -(CH₂)₂Si[O(CH₂)₄OCH=CH₂]₃ and having a viscosity of 1200 centipoise (mPa·s) was mixed thoroughly. It was coated onto biaxially oriented polypropylene at a coating weight of approximately 0.7 gram(g)/m. Curing was carried out on a Fusion™ UV processor equipped with a H-bulb with an irradiating power of 600 W/in (9.3 x 10⁵ W/m). Cure time was determined as line speed to no silicone transfer to an acrylic adhesive. The resulting coating cured at a speed of 350 ft/min. (1.78 m/s).

### Example 2

The procedures of Example 1 were repeated except as noted below. 0.5 gram of a reactive diluent (HDDVE) was added to 9.5 grams of the same silicone vinylether and mixed thoroughly. Next, 0.20 gram of the triflate catalyst of Example 1 was added to this mixture and stirred thoroughly. This mixture was then coated on a polypropylene as described above. Curing was performed as in Example 1 on a Fusion UV irradiator. Cure time was also determined as described above. The resulting coating cured at a speed of 175 ft/min. (0.89 m/s).

### Example 3

The above procedures were again repeated except as noted. 1.0 gram of a reactive diluent (HDDVE) was added to 9.0 grams of silicone vinylether copolymer of Example 1 and mixed thoroughly. Next 0.20 gram of the same triflate catalyst was added to this mixture and stirred thoroughly. This mixture was then coated on polypropylene as above. Curing was carried out as in Example 1. The resulting coating cured at a speed of 375 ft/min. (1.91 m/s).

### Example 4

The above procedures were again repeated. 0.5 gram of a reactive diluent (TMPTVE) was added to 9.5 grams of the same silicone vinylether copolymer and mixed thoroughly. 0.20 gram of the triflate catalyst was added to this mixture and stirred thoroughly. This mixture was then coated as in Example 1. The resulting coating cured at a speed of 390 ft/min. (1.98 m/s).

### Example 5

The procedures of Example 1 were again followed with 1.0 gram of a reactive diluent (TMPTVE) being added to 9.0 grams of silicone vinylether copolymer and mixed thoroughly. Next 0.20 gram of the triflate catalyst of Example 1 was added to this mixture and the resulting mixture was stirred thoroughly. This mixture was then coated on polypropylene as in the preceding examples. Curing was then performed as above. Cure time was determined as in the prceding examples. The resulting coating cured at a speed of 465 ft/min. (2.36 m/s).

### Example 6

Following the procedures of Example 1, 0.5 gram of a reactive diluent (HBVE) was added to 9.5 grams of silicone vinylether copolymer and mixed thoroughly. 0.20 gram of the same triflate catalyst was added to this mixture and stirred thoroughly. This mixture was then coated on polypropylene as above. Curing was performed as in Example 1. Cure time was also determined as above. The resulting coating cured at a speed of 100 ft/min. (0.51 m/s).

### Example 7

Except as noted, the procedures of Example 1 were repeated wherein 1.0 gram of a reactive diluent (HBVE) was added to 9.0 grams of silicone vinylether copolymer and mixed thoroughly. 0.20 gram of the triflate catalyst of Example 1 was added to this mixture and stirred thoroughly. This mixture was then coated on a polypropylene as in the preceding examples. Curing was carried out as above. The resulting coating cured at a speed of 75 ft/min. (0.38 m/s).

### Example 8

The procedures of Example 1 were again followed except as noted below. 5.0 grams of a vinyl ether functional silicone resin having the general formula: 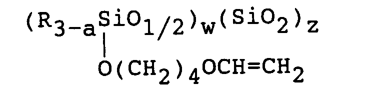
and having a viscosity of 350 centipoise (mPa·s) was added to 5.0 grams of silicone vinylether copolymer and mixed thoroughly. 0.20 gram of the triflate catalyst of Example 1 was added to this mixture and stirred thoroughly. This bath was then coated on polypropylene as above. Curing was done as in Example 1. The resulting coating cured at a speed of 350 ft/min. (1.78 m/s).

### Example 9

The above procedures were again repeated except as noted. 5.0 grams of a vinyl ether functional silicone resin having the general formula: 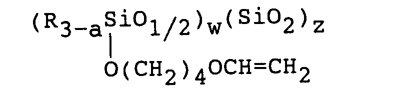
and having a viscosity of 50,000 centipoise (mPa·s) was added to 5.0 grams of silicone vinylether copolymer of Example 1 and mixed thoroughly. 0.20 gram of the same triflate catalyst was added to this mixture and stirred thoroughly. This bath was then coated on polypropylene as above. Curing was performed as in the above examples. The resulting coating cured at a speed of 300 ft/min. (1.52 m/s).

### Examples 10-15

In the following examples, the vinyl ether functional silicone resin (CRA) of Example 8 was added to the silicone vinylether copolymer of Example 1 and mixed thoroughly. A diluent was then added to this mixture and stirred thoroughly. 0.20 gram of the same triflate catalyst was added to this mixture and also stirred thoroughly. This bath was then coated on polypropylene. Curing was then carried out as above. Cure was determined as described in the preceding examples. The types and amounts (in grams) of Copolymer, CRA and diluent are denoted in Table I. The cure rates of the resulting coatings are also listed.

**Table I**

| Example | | | | | | |
|---|---|---|---|---|---|---|
| Component | 10 | 11 | 12 | 13 | 14 | 15 |
| Copolymer | 4.75 | 4.50 | 4.75 | 4.50 | 4.75 | 4.50 |
| CRA | 4.75 | 4.50 | 4.75 | 4.50 | 4.75 | 4.50 |
| diluent: HDDVE | 0.50 | 1.00 | | | | |
| TMPTVE | | | 0.50 | 1.00 | | |
| HBVE | | | | | 0.50 | 1.00 |
| Cured at: (ft/min.) (m/s) | 200 | 325 | 350 | 365 | 90 | 75 |
| | 1.02 | 1.65 | 1.78 | 1.85 | 0.46 | 0.38 |

### Examples 16-29

In the following examples, the vinyl ether functional silicone resin (CRA) of Example 8 was added to the silicone vinylether copolymer of Example 1 and mixed thoroughly. A diluent was then added to this mixture and stirred thoroughly. 0.20 gram of the same triflate catalyst was added and the resulting mixture was stirred thoroughly. The types and amounts (in grams) of Copolymer, CRA and diluent are denoted in Table II. This bath was then coated on polypropylene as above. Curing was also done as above. The coated sheet was aged 1 day at room temperature prior to lamination. Laminated sheets were also aged 1 day at room temperature prior to running release. Release Speed was 400 inches per minute (0.17 m/s) at a 180 degree peel. The samples were evaluated for release against TESA™ 7475 (acrylic tape), TESA™ 7476 (rubber tape), a hot melt adhesive and water based acrylic tape. The release performance of the resulting coatings is shown in Table III.

**Table II**

| Example | Copolymer | CRA | Diluent amount | Diluent type |
|---|---|---|---|---|
| 16 | 10.00 | 10.00 | | |
| 17 | 9.50 | | 0.50 | HDDVE |
| 18 | 9.00 | | 1.00 | HDDVE |
| 19 | 9.50 | | 0.50 | TMPTVE |
| 20 | 9.00 | | 1.00 | TMPTVE |
| 21 | 9.50 | | 0.50 | HBVE |
| 22 | 9.00 | | 1.00 | HBVE |
| 23 | 4.75 | 4.75 | 0.50 | HDDVE |
| 24 | 4.50 | 4.50 | 1.00 | HDDVE |
| 25 | 4.75 | 4.75 | 0.50 | TMPTVE |
| 26 | 4.50 | 4.50 | 1.00 | TMPTVE |
| 27 | 4.50 | 4.50 | 1.00 | TMPTVE |
| 28 | 4.75 | 4.75 | 0.50 | HBVE |
| 29 | 4.50 | 4.50 | 1.00 | HBVE |

**Table III**

| Release Performance (g/m) | | | | |
|---|---|---|---|---|
| | Tesa 7475 | Tesa 7476 | Hot Melt | Water-based Acrylic |
| 16 | 700 | 584 | 468 | 448 |
| 17 | 504 | 480 | 360 | 236 |
| 18 | 604 | 504 | 432 | 328 |
| 19 | 484 | 488 | 392 | 192 |
| 20 | 788 | 564 | 436 | 276 |
| 21 | 536 | 492 | 492 | 248 |
| 22 | 660 | 564 | 616 | 208 |
| 23 | 2124 | 1480 | 2352 | 956 |
| 24 | 2072 | 1388 | 2156 | 868 |
| 25 | 1584 | 812 | 2000 | 736 |
| 26 | 2544 | 1744 | 2404 | 1080 |
| 27 | 1960 | 1412 | 2336 | 1152 |
| 28 | 1876 | 1164 | 2436 | 680 |
| 29 | 1920 | 1332 | 2236 | 480 |

### Examples 30-43

Curable compositions containing vinylether functional siloxanes and aromatic iodonium salts of the instant invention were evaluated for cure and release performance. In the following examples, the vinyl ether functional silicone resin (CRA) of Example 8 was added to the silicone vinylether copolymer of example 1 and mixed thoroughly. A diluent was then added to this mixture and the resulting solution was then stirred thoroughly. Next, 0.20 gram of a diaryliodonium salt of para-toluene sulfonic acid catalyst was added to this mixture and the resulting mixture was stirred thoroughly and applied to polypropylene at a coat weight as above. The types and amounts (in grams) of Copolymer, CRA and diluent are denoted in Table IV. The samples were also cured as above. The speed at which each coating cured is shown in Table V. The coated sheet was aged 1 day at room temperature prior to lamination. Laminated sheets were also aged 1 day at room temperature prior to running release. Release Speed was 400 inches per minute (0.17 m/s) at a 180 degree peel. The samples were evaluated for release as above. The release performance of the resulting coatings is shown in Table V in grams/inch.

**Table IV**

| Example | Copolymer | CRA | Diluent amount | Diluent Type |
|---|---|---|---|---|
| 30 | 10.00 | | | |
| 31 | 9.50 | | 0.50 | HDDVE |
| 32 | 9.00 | | 1.00 | HDDVE |
| 33 | 9.50 | | 0.50 | TMPTVE |
| 34 | 9.00 | | 1.00 | TMPTVE |
| 35 | 9.50 | | 0.50 | HBVE |
| 36 | 9.00 | | 1.00 | HBVE |
| 37 | 5.00 | 5.00 | | |
| 38 | 4.75 | 4.75 | 0.50 | HDDVE |
| 39 | 4.50 | 4.50 | 1.00 | HDDVE |
| 40 | 4.75 | 4.75 | 0.50 | TMPTVE |
| 41 | 4.50 | 4.50 | 1.00 | TMPTVE |
| 42 | 4.75 | 4.75 | 0.50 | HBVE |
| 43 | 4.50 | 4.50 | 1.00 | HBVE |

**Table V**

| Release Performance (g/m) | | | | | |
|---|---|---|---|---|---|
| Example | CURE (m/s) | Tesa 7475 | Tesa 7476 | Hot Melt | Water Based Acrylic |
| 30 | 0.89 | 464 | 444 | 428 | 196 |
| 31 | 0.76 | 512 | 460 | 444 | 184 |
| 32 | 1.02 | 424 | 440 | 440 | 188 |
| 33 | 0.89 | 704 | 640 | 640 | 360 |
| 34 | 1.14 | 564 | 404 | 440 | 360 |
| 35 | 0.64 | 448 | 432 | 420 | 216 |
| 36 | 0.38 | 376 | 356 | 396 | 188 |
| 37 | 0.38 | 1468 | 832 | 1632 | 724 |
| 38 | 0.38 | 1804 | 808 | 1800 | 1184 |
| 39 | 0.64 | 1864 | 688 | 1888 | 1344 |
| 40 | 0.76 | 1724 | 808 | 1836 | 752 |
| 41 | 0.51 | 2652 | 820 | 1780 | 760 |
| 42 | 0.64 | 1724 | 788 | 1656 | 884 |
| 43 | 0.51 | 1552 | 924 | 1576 | 836 |

## Claims

1. A curable coating composition comprising:
(A) a siloxane compound having the general formula: 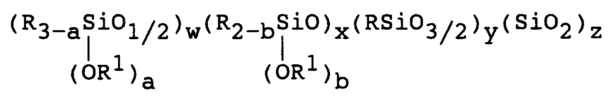 wherein R is a monovalent hydrocarbon radical or halohydrocarbon radical having from 1 to 20 carbon atoms, R¹ is selected from monovalent hydrocarbon or halohydrocarbon radicals having from 1 to 8 carbon atoms and a group having a formula selected from (i) -ROCH=CH₂ or (ii) -RSi[OROCH=CH₂]_{3-c}R_{c} wherein R is a divalent hydrocarbon or halohydrocarbon radical having from 1 to 20 carbon atoms, c has a value of 0 to 2, R is as defined above, w has a mole percent of from greater than 0 to 100, x has a mole percent of from 0 to less than 100, y has a mole percent of from 0 to less than 100, z has a mole percent of from 0 to less than 100, a is an integer of from 0 to 3, b is an integer of from 0 to 2, the sum of w+x+y+z is equal to 100 mole percent, with the proviso that at least one ≡SiOROCH=CH₂ group or ≡SiORSi[OROCH=CH₂]_{3-c}R_{c} group exists in each compound; and
(B) a photoinitiator selected from the group consisting of diaryliodonium salts of sulfonic acids, triarylsulfonium salts of sulfonic acids, diaryliodonium salts of boronic acids and triarylsulfonium salts of boronic acids.

2. A composition according to claim 1 wherein (B) is a is a diaryliodonium salt having the general formula RⁱₐArI⁺ArRⁱⁱ_{b}X⁻ wherein Rⁱ is selected from monovalent hydrocarbon or halohydrocarbon radicals free of aliphatic unsaturation having from 1 to 40 carbon atoms, halogen atoms, NO₂, CN, COOH, SO₃H, alkoxy or alkoxy substituted groups, nitro substituted groups, nitrile substituted groups, carboxylic acid substituted groups and sulfonic acid substituted groups, Rⁱⁱ is selected from monovalent hydrocarbon radicals free of aliphatic unsaturation and having from 1 to 40 carbon atoms, alkoxy substituted groups, arylalkoxy radicals, aryloxy radicals and halogen atoms, Ar denotes arene radicals having from 6 to 40 carbon atoms, a has a value of from 0 to 10, b has value of from 0 to 10 and X⁻ is an anion selected from perfluoroalkylsulfonic acid anions, hexahalometallic acid anions, hexahalometalloidic acid anions, tetrahaloboronic acid anions, tetrakis(perfluoroaryl)boronic acid anions and tetrakisperfluoro-alkylsulfonatoboronic acid anions.

3. A composition according to claim 1 wherein (B) is a diaryliodonium salt having the general formula RⁱⁱⁱₐAr-I⁺-Ar-R^{iv}_{b}-O₃S-Ar-RⁱⁱⁱₐX⁻ wherein Rⁱⁱⁱ is selected from monovalent hydrocarbon or halohydrocarbon radicals free of aliphatic unsaturation and having from 1 to 20 carbon atoms, halogen atoms, NO₂, CN, COOH, SO₃H, alkoxy or alkoxy substituted groups, nitro substituted groups, nitrile substituted groups, carboxylic acid substituted groups, sulfonic acid substituted groups and Ar denotes arene radicals having from 6 to 40 carbon atoms, R^{iv} is selected from alkoxy radicals or aryloxy radicals, a has a value of from 0 to 10, b has a value of from 0 to 10 and X is an aryl sulfonate anion.

4. A composition according to claim 1 wherein x is zero.

5. A composition according to claim 4 wherein the composition further comprises an organopolysiloxane having the general formula: 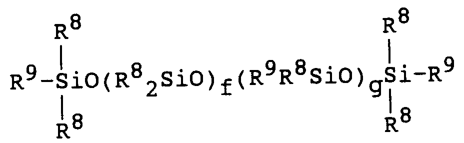 wherein R⁸ is a monovalent hydrocarbon radical having from 1 to 20 carbon atoms, R⁹ is R⁸ or is a group having its formula selected from (i) -OR¹⁰OCH=CH₂ or (ii) -R¹⁰Si[OR¹⁰OCH=CH₂]₃₋ₕR¹¹ₕ wherein R¹⁰ is a divalent hydrocarbon or halohydrocarbon radical having from 1 to 20 carbon atoms, h has a value of 0 to 2, R¹¹ is a monovalent hydrocarbon radical having from 1 to 20 carbon atoms, f has a value of 0 to 5000, g has a value of 0 to 800, with the proviso that at least one ≡SiOR¹⁰OCH=CH₂ or ≡SiR¹⁰Si[OR¹⁰OCH=CH₂]₃₋ₕR¹¹ₕ group exists in each compound.

6. A composition according to claim 5 wherein the composition further comprises an organic vinyl ether compound having the general formula (CH=CHOR³)_{d}CR⁴_{4-d} wherein R³ is a divalent hydrocarbon or halohydrocarbon radical having from 1 to 20 carbon atoms, R⁴ is a monovalent hydrocarbon or halohydrocarbon radical having from 1 to 20 carbon atoms or hydrogen and d has a value of 1 to 3.

7. A composition according to claim 6 wherein the composition further comprises a compound having the general formula R⁵₄₋ₑSi(OR⁶)ₑ wherein R⁵ is selected from a monovalent hydrocarbon or halohydrocarbon radical having from 1 to 20 carbon atoms and a vinyl ether group having its formula selected from (a) -OR⁷OCH=CH₂ or (b) -R⁷OR⁷OCH=CH₂ wherein R⁷ is a divalent hydrocarbon or halohydrocarbon radical having from 1 to 20 carbon atoms, R⁶ is a monovalent hydrocarbon radical having from 1 to 8 carbon atoms, e has a value of from 1 to 3, with the proviso that at least one ≡SiOR⁷OCH=CH₂ group or =SiR⁷OR⁷OCH=CH₂ group exists in each compound.

8. A method of making a cured coating, comprising the steps of
(I) applying the curable composition of claim 1 to a solid substrate to form a coating, and
(II) exposing the coating to an energy source selected from (i) actinic radiation or (ii) actinic radiation in combination with heat in an amount sufficient to cure the coating.

9. A method according to claim 8 further comprising releasably adhering a pressure sensitive adhesive composition to the cured coating.

10. A product obtainable by the method of claims 8 or 9.
